# EUROPEAN PATENT APPLICATION

(11) **EP 4 692 996 A1**
(43) Date of publication of application: **11.02.2026**
(21) Application number: 24865613.4
(22) Date of filing: 29.05.2024
(51) Int. Cl.: G06F 3/03, H04N 13/363, H04N 23/11

(54) **PROJECTOR AND METHOD FOR IDENTIFYING TOUCH INPUT THEREOF**

(30) Priority: 15.09.2023 KR 20230123180
(71) Applicant: Samsung Electronics Co., Ltd., Suwon-si, Gyeonggi-do 16677 (KR)
(72) Inventor: LEE, Seungik, Suwon-si Gyeonggi-do 16677 (KR); KIM, Jaeyong, Suwon-si Gyeonggi-do 16677 (KR); KANG, Heungsuk, Suwon-si Gyeonggi-do 16677 (KR); KIM, Minsup, Suwon-si Gyeonggi-do 16677 (KR)
(74) Representative: Gulde & Partner
(86) International application number: PCT/KR2024/007339
(87) International publication number: WO 2025/058168

(57) **Abstract**

A projector is provided. The projector includes: a projection part including a light source configured to project an image, an infrared emitter comprising circuitry configured to emit infrared ray to a projection area where the image is projected, an infrared camera module including an infrared camera configured to generate an image by photographing the projection area using an image sensor, a memory storing correction data including correction values for correcting brightness of the image, and at least one processor configured to: correct brightness of an image obtained through the infrared camera module using the correction data, and identify whether a touch input for the projected image is entered based on the corrected brightness, wherein the correction data is generated based on first correction data and second correction data, the first correction data includes correction values for correcting a decrease in intensity of the infrared ray according to a distance from the infrared emitter, and the second correction data includes correction values for correcting lens shading.

## Description

### [Technical Field]

The present disclosure relates to a projector for identifying a touch input for a projected image, and a method for identifying a touch input thereof.

### [Background Art]

A projector is a device that projects images. By projecting light onto a screen to create an image, a projector can easily implement a larger screen compared to other types of display devices.

Recently, a projector may not only perform its own function of projecting images, but also receive input from a hand or a pen located on a projected image and performs the corresponding function.

### [Disclosure]

### [Technical Solution]

A projector according to an example embodiment includes: a projection part comprising a light source configured to project an image, an infrared emitter, comprising circuitry, configured to output infrared ray to a projection area where the image is projected, an infrared camera module comprising an infrared camera configured to generate an image by photographing the projection area using an image sensor, a memory storing correction data including correction values for correcting brightness of the image, and at least one processor. At least one processor is configured to correct brightness of an image obtained through the infrared camera module using the correction data; identify whether a touch input for the projected image is entered based on the corrected brightness, wherein the correction data is generated based on first correction data and second correction data, the first correction data including correction values for correcting a decrease in intensity of the infrared ray according to a distance from the infrared emitter, and the second correction data including correction values for correcting lens shading.

The correction values included in the first correction data may be determined based on an intensity of the infrared measured in a plurality of areas in the projection area.

The correction values included in the first correction data include correction values for a plurality of pixels of the image sensor. The correction values for the plurality of pixels of the image sensor may include correction values for pixels corresponding to the plurality of areas from among the plurality of pixels and correction values for pixels corresponding to remaining areas. The correction values for pixels corresponding to the plurality of areas may include correction values for the plurality of areas. The correction values for the plurality of areas may be determined such that when the correction values of the plurality of areas are applied to intensities of a plurality of infrared ray measured in the plurality of areas, intensities of the plurality of infrared ray to which the correction values are applied become equal to each other.

The second correction data may include correction values for a plurality of pixels of the image sensor. The correction values of the first correction data and the correction values of the second correction data may be multiplied on a pixel-by-pixel basis to obtain correction values of the correction data.

At least one processor, individually and/or collectively, may be configured to: based on infrared ray output from the infrared emitter being reflected by an object present in the projection area and received by the infrared camera module, obtain pixel values of the plurality of pixels of the image sensor, and correct brightness of the image by applying the correction values included in the correction data to the pixel values, wherein pixel values may include Y component of YUV data.

At least one processor, individually and/or collectively, may be configured to: identify whether there is an area in the image in which brightness is equal to or greater than a specified value based on the corrected brightness, and based on identifying that there is an area in which brightness is equal to or greater than the specified value, identify that the touch input is entered at a location of the projected image corresponding to the identified area.

A method of identifying a touch input of a projector according to an example embodiment may include: projecting an image, outputting infrared ray to a projection area where the image is projected using an infrared emitter, generating an image by photographing the projection area using an infrared camera module including an infrared camera, correcting brightness of the image obtained through the infrared camera module using the correction data, and identifying whether a touch input for the projected image is entered based on the corrected brightness, wherein the correction data is generated based on first correction data and second correction data, the first correction data including correction values for correcting a decrease in intensity of the infrared ray according to a distance from the infrared emitter, and the second correction data including correction values for correcting lens shading.

In a non-transitory computer-readable medium storing a computer instruction that, when executed at least one processor of a projector, causes the projector to perform operations comprising: projecting an image, outputting infrared ray to a projection area where the image is projected using an infrared emitter, generating an image by photographing the projection area using an infrared camera module comprising an infrared camera, correcting brightness of the image obtained through the infrared camera module using the correction data, and identifying whether a touch input for the projected image is entered based on the corrected brightness, wherein the correction data is generated based on first correction data and second correction data, the first correction data including correction values for correcting a decrease in intensity of the infrared ray according to a distance from the infrared emitter, and the second correction data including correction values for correcting lens shading.

### [Description of Drawings]

The above and other aspects, features and advantages of certain embodiments of the present disclosure will be more apparent from the following detailed description, taken in conjunction with the accompanying drawings, in which:
FIGS. 1A and 1B are diagrams illustrating an example projector according to various embodiments;
FIG. 2A is a block diagram illustrating an example configuration of an projector according to various embodiments;
FIGS. 2B and 2C are diagrams illustrating an example of configuration of an infrared emitter according to various embodiments;
FIG. 2D is a block diagram illustrating an example configuration of an infrared camera module according to various embodiments;
FIG. 2E is a block diagram illustrating an example configuration of an projector according to various embodiments;
FIG. 3 is a block diagram illustrating an example configuration of an electronic apparatus according to various embodiments;
FIGS. 4A and 4B are diagrams illustrating an example method of generating first correction data according to various embodiments;
FIG. 5 is a diagram illustrating an example of first correction data according to various embodiments;
FIG. 6 is a diagram illustrating an example of second correction data according to various embodiments;
FIG. 7 is a diagram illustrating an example of correction data according to various embodiments;
FIGS. 8A and 8B are diagrams illustrating an example method of detecting a direction of a touch input according to various embodiments;
FIGS. 9A and 9B are diagrams illustrating an example method of detecting a touch input approaching a projection area according to various embodiments;
FIGS. 10A and 10B are diagrams illustrating an example method of detecting a touch input moving way from a projection area according to various embodiments; and
FIG. 11 is a flowchart illustrating an example method of identifying a touch input location of a projector according to various embodiments.

### [Mode for Invention]

Hereinafter, the present disclosure will be described in greater detail with reference to the accompanying drawings.

Since the disclosure may be variously modified and have several example embodiments, various example embodiments of the disclosure will be illustrated in the drawings and be described in greater detail in the detailed description. However, it is to be understood that the disclosure is not limited to specific example embodiments, but includes all modifications, equivalents, and/or alternatives according to example embodiments of the disclosure. Throughout the accompanying drawings, similar components may be denoted by similar reference numerals.

In describing the disclosure, when it is decided that a detailed description for the known functions or configurations related to the disclosure may unnecessarily obscure the gist of the disclosure, the detailed description therefor may be omitted.

In addition, the following example embodiments may be modified in several different forms, and the scope and spirit of the disclosure are not limited to the following example embodiments. Rather, these example embodiments make the disclosure thorough and complete, and are provided to completely transfer the spirit of the disclosure to those skilled in the art.

Terms used in the disclosure are used to describe specific example embodiments rather than limiting the scope of the disclosure. Singular forms are intended to include plural forms unless the context clearly indicates otherwise.

In the disclosure, the expressions "have", "may have", "include" and or "may include" used herein indicate existence of corresponding features (e.g., elements such as numeric values, functions, operations, or components) but do not exclude presence of additional features.

In the disclosure, the expressions "A or B", "at least one of A or/and B", or "one or more of A or/and B", and the like may include any and all combinations of one or more of the items listed together. For example, the term "A or B", "at least one of A and B", or "at least one of A or B" may refer to all of the case (1) where at least one A is included, the case (2) where at least one B is included, or the case (3) where both of at least one A and at least one B are included.

Expressions "first", "second", "1^{st}," "2^{nd}," or the like, used in the disclosure may indicate various components regardless of sequence and/or importance of the components, will be used only in order to distinguish one component from the other components, and do not limit the corresponding components.

When it is described that an element (e.g., a first element) is referred to as being "(operatively or communicatively) coupled with/to" or "connected to" another element (e.g., a second element), it should be understood that it may be directly coupled with/to or connected to the other element or an intervening element (e.g., a third element) may be present.

When an element (e.g., a first element) is referred to as being "directly coupled with/to" or "directly connected to" another element (e.g., a second element), it should be understood that there are no intervening element (e.g., a third element).

An expression "~configured (or set) to" used in the disclosure may be replaced by an expression, for example, "suitable for," "having the capacity to," "~designed to," "~adapted to," "~made to," or "~capable of" depending on a situation. A term "~configured (or set) to" may not necessarily refer to "specifically designed to" in hardware.

An expression "~an apparatus configured to" may refer, for example, to the apparatus "is capable of" together with other apparatuses or components. For example, a "processor configured (or set) to perform A, B, and C" may refer, for example, to a dedicated processor (for example, an embedded processor) for performing the corresponding operations or a generic-purpose processor (for example, a central processing unit (CPU) or an application processor) that may perform the corresponding operations by executing one or more software programs stored in a memory apparatus.

In various example embodiments, a "module" or a "unit" may perform at least one function or operation, and be implemented by hardware or software or be implemented by a combination of hardware and software. In addition, a plurality of "modules" or a plurality of "units" may be integrated in at least one module and be implemented by at least one processor except for a 'module' or a 'unit' that needs to be implemented by specific hardware.

Hereinafter, various example embodiments of the present disclosure will be described in greater detail with reference to the accompanying drawings.

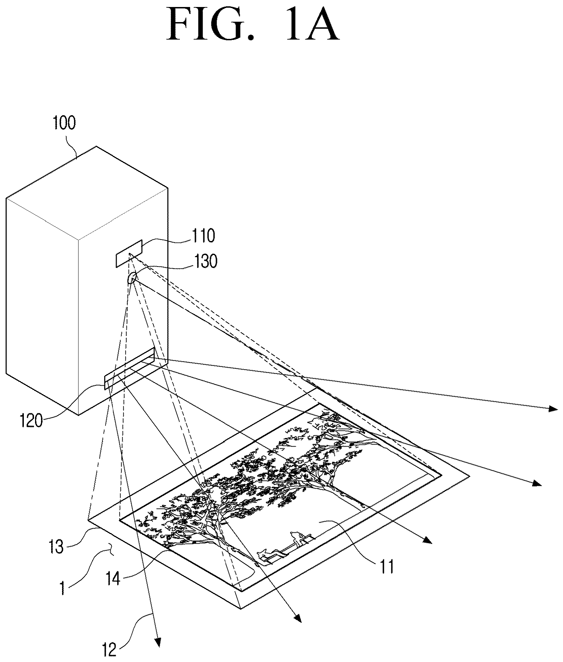

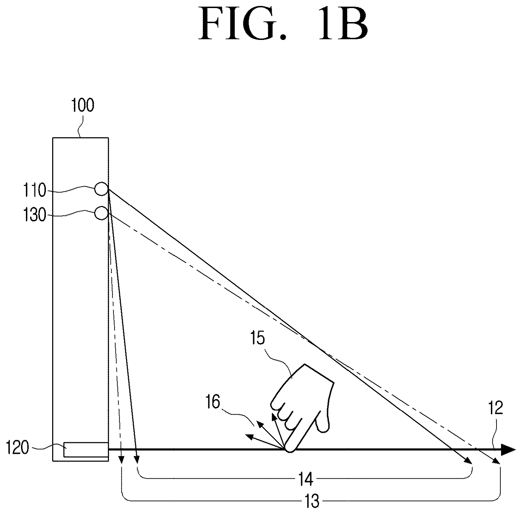

FIGS. 1A and 1B are diagrams illustrating an example projector according to various embodiments.

Referring to FIGS. 1A and 1B, a projector 100 (or projector device) may be a device for magnifying and projecting an image onto a projection surface (e.g., floor surface, etc.). The projector 100 may be a movable projector (or portable projector) that can be carried by a user. The projector 100 may also be implemented as an ultra short throw (UST) projector, and may display a large screen image.

The projector 100 may project an image 11 onto a floor surface 1 using a projection part 110, and irradiate infrared ray (IR) 12 in a direction parallel to the floor surface 1 using an infrared emitter 120. The projector 100 may photograph the floor surface 1 using the infrared camera module 130. An area 13 that is photographed by the infrared camera module 130 may include an area (e.g., projection area) 14 where the image 11 is projected.

When an object 15 is located within the projection area 14, infrared ray 12 output from the projector 100 may be reflected by the object 15. The projector 100 may obtain an image by receiving infrared ray 16 reflected by the object 15 using the infrared camera module 130, and may identify the location of the object 15 based on a brightness value of the image. The projector 100 may identify a location where a touch input is entered in the image 11 based on the location of the object 15, and may perform a function corresponding to the touch input.

As described above, the projector 100 may obtain an image through the infrared camera module 130 and identify the location of an object based on a brightness value of the image.

An image sensor of the infrared camera module 130 photographs an image through a lens, and the optical characteristics of the lens, such as the convex shape of the lens, may cause a lens shading phenomenon where the brightness of the edge area of the image is reduced compared to the brightness of the center area. If such lens shading is not corrected, the location of an object can be inaccurately identified.

In addition, the brightness of an image may be determined by the intensity of the infrared ray reflected by an object and received by the infrared camera module 130. Considering that the greater the distance from the infrared emitter 120, the smaller the intensity of the infrared ray that arrives, the farther an object is located from the infrared emitter 120, the smaller the intensity of the infrared ray reflected by the object. As such, if the intensity of the reflected infrared ray varies depending on the location of the object, the brightness of the object captured in the image may also vary depending on the location of the object, which may also affect the identification of the location of the object.

The projector 100 according to an embodiment may perform lens shading correction in identifying the location of an object using an image obtained through the infrared camera module 130, as well as correction for the difference in the intensity of infrared ray reaching the object depending on the location of the object. This may result in improved recognition of a touch input.

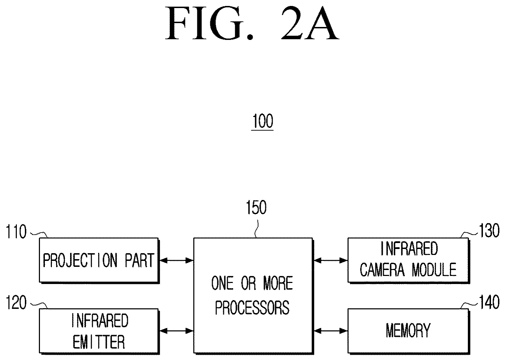

FIG. 2A is a block diagram illustrating an example configuration of a projector according to various embodiments.

Referring to FIG. 2A, the projector 100 includes the projection part (e.g., including a light source) 110, the infrared emitter 120, the infrared camera module (e.g., including an infrared camera) 130, a memory 140, and one or more processors (e.g., including processing circuitry) 150.

The projection part 110 may project an image. The projection part 110 may include a light source. For example, the projection part 110 may include a light source of at least one of a lamp, an LED, or a laser.

The projection part 110 may project images using a variety of projection methods. For example, the projection part 110 may project images using one of a cathode-ray tube (CRT) projection method, a liquid crystal display (LCD) projection method, a digital light processing (DLP) projection method, a laser projection method, or the like, but the disclosure is not limited thereto.

The projection part 110 may perform a variety of functions to adjust an image under the control of the one or more processors 150.

For example, the projection part 110 may adjust the focus of an image according to a distance from a floor surface (e.g., a projection distance) and project the image onto the floor surface.

In addition, the projection part 110 may perform a keystone correction function. The keystone correction function refers to a function to correct a distorted image. For example, the projection part 110 may perform a horizontal keystone correction when an image is distorted in the left and right directions, and a vertical keystone correction when an image is distorted in the up and down directions. The projection part 110 may also perform a quick corner keystone correction to correct unbalanced corners of an area.

The infrared emitter 120 outputs (or irradiates) infrared ray. The infrared emitter 120 may include a laser diode (e.g., an IR emitter) for emitting infrared ray. The infrared emitter 120 may output infrared ray to a projection area where an image is projected by the projection part 110. For example, the infrared emitter 120 may output infrared ray parallel to the projection area.

In an example, the infrared emitter 120 may include a reflector for reflecting infrared ray emitted from a laser diode to the front of the projector 100.

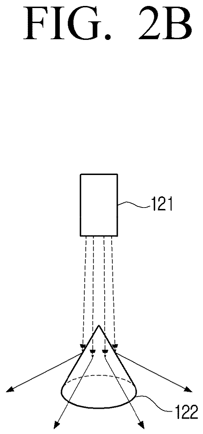

For example, as shown in FIG. 2B, the shape of a reflector 122 may be a cone. A material capable of reflecting infrared ray, such as a mirror or the like, may be formed on the side of the reflector 122. A laser diode 121 may be disposed on top of the reflector 122. Accordingly, the infrared ray output from the laser diode 121 may be reflected from the side of the reflector 122 and output to the front of the projector 100.

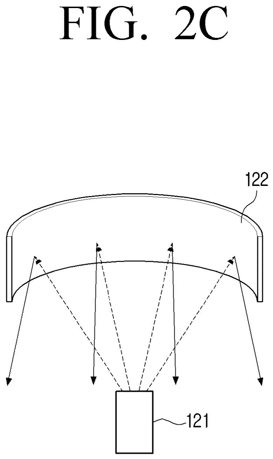

In another example, the reflector 122 may have a curved surface shape, as shown in FIG. 2C. The curved surface of the reflector 122 may be formed with a material that can reflect infrared ray, such as a mirror or the like. The laser diode 121 may output infrared ray toward the curved surface of the reflector 122. Accordingly, the infrared ray output from the laser diode 121 may be reflected from the curved surface of the reflector 122 and output to the front of the projector 100.

As such, if a reflector is present, infrared ray may be reflected by the reflector and output to a wide area in front of the projector 100, thereby enhancing the field of view (FOV) of the infrared camera module 130.

The infrared camera module 130 includes an infrared camera and generates an image by photographing a projection area using an image sensor. For example, the infrared camera module 130 may receive light and generate an image corresponding to the received light. If an object is present in the projection area, the infrared ray output from the infrared emitter 120 may be reflected by the object. The infrared camera module 130 may receive the infrared ray reflected by the object, and may generate an image using an electrical signal corresponding to the received infrared ray.

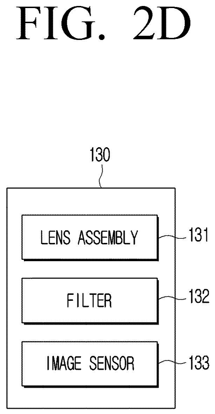

Referring to FIG. 2D, the infrared camera module 130 may include a lens assembly (e.g., including a lens) 131, a filter 132, and an image sensor 133. However, such a configuration is only an example, and new configurations may be added or some configurations may be omitted in practicing the present disclosure. For example, the infrared camera module 130 may further include an image signal processor (ISP) that may include various processing circuitry. The image signal processor may be configured as at least a portion of the one or more processors 150.

The lens assembly 131 may collect light incident from the outside. The lens assembly 131 may include one or more lenses. For example, the lens assembly 131 may refract light incident from the outside. The refracted light may be focused onto the image sensor 133.

The filter 132 may pass light in an infrared band. For example, the filter 132 may include a band pass filter that allows light in a specific band to pass through. The filter 132 may pass light in the infrared band among light that has passed through the lens assembly 131.

The image sensor 133 may generate an image corresponding to the infrared ray using the infrared lay that has passed through the filter 132. The image sensor 133 may be implemented as a charged coupled device (CCD) sensor or a complementary metal oxide semiconductor (CMOS) sensor. The image sensor 133 may generate an image by converting the infrared ray that has passed through the filter 132 to an electrical signal using the plurality of pixels. Subsequently, the image sensor 133 may transmit the image to the one or more processors 150.

The memory 140 may store data required for the projector 100 to operate according to various embodiments. For example, the memory 140 may store correction data including correction values for correcting the brightness of an image.

The memory 140 may be implemented as a memory embedded in the projector 100 (e.g., volatile memory, non-volatile memory, hard drive or solid state drive, etc.), or may be implemented as a memory removably attached to the projector 100 (e.g., memory card, external memory, etc.), depending on the purpose of storing data.

The memory 140 may store one or more instructions. The one or more processors 150 may perform the operation of the projector according to various embodiments by executing one or more instructions stored in the memory. The memory 140 may store programs, applications, and data for driving the projector 100.

The one or more processors 150 may include various processing circuitry and control the overall operations of the projector 100. For example, the one or more processors 150 may be connected to the components of the projector 100 to control the overall operations of the projector 100. For example, the one or more processors 150 may be connected to the projection part 110, the infrared emitter 120, the infrared camera module 130, and the memory 140 to control the projector 100. The one or more processors 150 may include one or a plurality of processors.

The one or more processors 150 may perform the operation of the projector 100 according to various embodiments by executing one or more instructions stored in the memory 140.

The one or more processors 150 may include one or more of an image signal process (ISP), a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 150 may control one or any combination of the other components of the projector 100, and may perform communication-related operations or data processing. The one or more processors 150 may execute one or more programs or instructions stored in the memory 140. For example, the one or more processors 150 may perform a method according to an embodiment by executing one or more instructions stored in the memory 140.

When a method according to an embodiment includes a plurality of operations, the plurality of operations may be performed by one processor or by a plurality of processors. For example, when a first operation, a second operation, and a third operation are performed by the method according to an embodiment, all of the first operation, the second operation, and the third operation may be performed by the first processor, or the first operation and the second operation may be performed by the first processor (e.g., a general-purpose processor) and the third operation may be performed by the second processor (e.g., an artificial intelligence-dedicated processor).

The one or more processors 150 may be implemented as a single core processor comprising a single core, or as one or more multicore processors comprising a plurality of cores (e.g., homogeneous multicore or heterogeneous multicore). When one or more processors 150 are implemented as multicore processors, each of the plurality of cores included in a multicore processor may include processor internal memory, such as cache memory, on-chip memory, and a common cache shared by the plurality of cores may be included in the multicore processor. Further, each of the plurality of cores (or some of the plurality of cores) included in the multi-core processor may independently read and perform program instructions to implement the method according to an embodiment, or all (or some) of the plurality of cores may be coupled to read and perform program instructions to implement the method according to an embodiment.

When a method according to an embodiment includes a plurality of operations, the plurality of operations may be performed by one core of a plurality of cores included in a multi-core processor, or may be performed by a plurality of cores. For example, when a first operation, a second operation, and a third operation are performed by a method according to an embodiment, all of the first operation, the second operation, and the third operation may be performed by the first core included in the multi-core processor, or the first operation and the second operation may be performed by the first core included in the multi-core processor and the third operation may be performed by the second core included in the multi-core processor.

In various embodiments of the present disclosure, the processor may refer, for example, to a system-on-chip (SoC) in which one or more processors and other electronic components are integrated, a single-core processor, a multi-core processor, or a core included in a single-core processor or multi-core processor. The core may be implemented as CPU, GPU, APU, MIC, DSP, NPU, hardware accelerator, or machine learning accelerator, but the core is not limited to the various embodiments of the present disclosure.

Hereinafter, for convenience of explanation, the one or more processors 150 will be referred to as the processor 150. For example, the processor 150 according to an embodiment of the disclosure may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

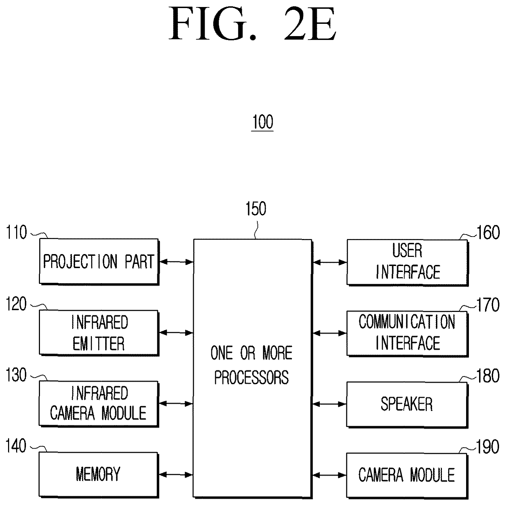

FIG. 2E is a block diagram illustrating an example configuration of a projector according to various embodiments.

Referring to FIG. 2E, the projector 100 may include the projection part 110, the infrared emitter 120, the infrared camera module 130, the memory 140, the one or more processors 150, a user interface (e.g., including interface circuitry) 160, a communication interface (e.g., including communication circuitry) 170, a speaker 180, and a camera module (e.g., including a camera) 190. However, the above components are only examples, and new configurations may be added or some configurations may be omitted in practicing the present disclosure. Configurations shown in FIG. 2E that are duplicative of the configurations shown in FIG. 2A may not be further described here.

The user interface 160 includes circuitry. The user interface 160 may receive a user input and transmit the user input to the processor 150.

The user interface 160 may include various circuitry, including various types of input devices.

For example, the user interface 160 may include physical buttons. The physical buttons may include function keys, directional keys, or dial buttons. The physical buttons may be implemented as a plurality of keys. The physical buttons may be implemented as a single key. If the physical buttons are implemented as a single key, when a user input in which the key is pressed for more than a threshold amount of time is received, the processor 150 may perform a function corresponding to the user input.

For example, the user interface 160 may receive a user input using a touch method. The user interface 160 may include a touch sensor or a touch screen.

For example, the user interface 160 may receive a user input from an external device. The external device may include a remote control device (e.g., a remote controller) for controlling the projector 100 or a user's mobile device (e.g., a smartphone, a tablet PC, or a wearable device). The mobile device may store an application for controlling the projector 100. The mobile device may receive a user input through the application, and may transmit the user input to the projector 100.

For example, the user interface 160 may receive a user input using voice recognition. The user interface 160 may receive a user voice using a microphone. The processor 150 may perform a function corresponding to the user voice. For example, the processor 150 may use a speech to text (STT) function to convert the user voice to text data, obtain control command data based on the text data, and perform a function corresponding to the user voice based on the control command data. According to an embodiment, the STT function may be performed on a server.

The communication interface 170 may include various communication circuitry and perform communication with external devices. For example, the communication interface 170 may perform communication with an external device, such as a server, a mobile device, or the like, through a nearby access point (AP). The access point (AP) may connect the local network (LAN) to which the projector 100 or the mobile device is connected to a wide area network (WAN) to which the server is connected. The projector 100 may be connected to the server through the wide area network (WAN). The communication interface 170 may also perform communication with external devices without going through an access point.

The communication interface 170 may include a wireless communication module or a wired communication module. The communication module may be implemented as at least one hardware chip.

The wireless communication module may include a module that performs communication with an external device. For example, the wireless communication module may include at least one of a Wi-Fi module, a Bluetooth module or an infrared communication module. However, the wireless communication module is not limited thereto, and may include communication modules that perform communication according to various wireless communication standards such as Long Term Evolution (LTE), LTE Advanced (LTE-A), 4th Generation (4G), 5th Generation (5G), etc.

The wired communication module may include a module that performs communication with an external device. For example, the wired communication module may include at least one of a LAN module, an Ethernet module, a High Definition Multimedia Interface (HDMI), a Universal Serial Bus (USB), a USB C-type, or a Display Port (DP).

The communication interface 170 may be provided with power from the outside. For example, the projector 100 may be provided with power from an external battery through HDMI, USB, USB C-type, etc., or may be provided with power from an outlet through a power adapter. In addition, the projector 100 may be provided with power from an external device (e.g., laptop, monitor, etc.) through a DP.

The speaker 180 may output an audio signal. The speaker 180 may include an acoustic output module. For example, the acoustic output module may include a plurality of acoustic output units. The plurality of acoustic output units may be symmetrically disposed within the body of the projector 100. The processor 150 may output audio signals in a 360-degree direction using the plurality of acoustic output units.

The camera module 190 may include a camera and obtain images by performing photography. For example, the camera module 190 may be an RGB camera. The camera module 190 may obtain an image of the projection area by photographing the direction in which the projection part 110 projects the image. The camera module 190 may include a lens assembly including one or more lenses, an image sensor, and an image signal processor. The image signal processor may include at least a portion of the one or more processors 150. If the image projected by the projection part 110 is distorted, the processor 150 may control the projection part 110 to correct the distortion in the image using an image obtained through the camera module 190.

Hereinafter, a method of generating correction data according to an embodiment will be described in greater detail.

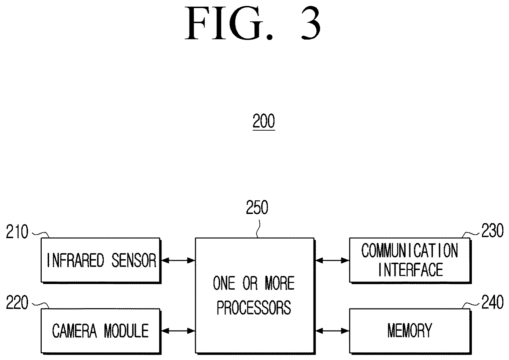

The process of obtaining correction data may be performed in an electronic apparatus. FIG. 3 is a block diagram illustrating an example configuration of an electronic apparatus according to various embodiments.

Referring to FIG. 3, an electronic apparatus 200 may include an infrared sensor 210, a camera module (e.g., including a camera) 220, a communication interface (e.g., including communication circuitry) 230, a memory 240, and one or more processors (e.g., including processing circuitry) 250.

The infrared sensor 210 may receive infrared ray and measure the intensity of the infrared ray. For example, the infrared sensor 210 may include a filter to remove signals in bands other than infrared ray, a photodiode to convert the infrared ray to an electrical signal, an amplifier to amplify the electrical signal, and the like. The infrared sensor 210 may then transmit information regarding the measured intensity to the one or more processors 250.

The camera module 220 may include a camera and obtain images by performing photography. For example, the camera module 220 may be an RGB camera. The camera module 220 may include a lens assembly including one or more lenses, an image sensor, and an image signal processor. The image signal processor may include at least a portion of the one or more processors 250.

The communication interface 230 may include various communication circuitry and perform communication with external devices. For example, the communication interface 230 may perform communication with an external device such as the projector 100 through a nearby access point (AP). The access point (AP) may connect the local network (LAN) to which the electronic apparatus 200 or a mobile device is connected to a wide area network (WAN) to which a server is connected. The electronic apparatus 200 may be connected to the server through the wide area network (WAN). The communication interface 230 may also perform communication with external devices without going through an access point.

The communication interface 230 may include a wireless communication module or a wired communication module. The communication module may be implemented as at least one hardware chip.

The wireless communication module may be a module that performs communication with an external device. For example, the wireless communication module may include at least one of a Wi-Fi module, a Bluetooth module or an infrared communication module. However, the wireless communication module is not limited thereto, and may include communication modules that perform communication according to various wireless communication standards such as LTE, LTE-A, 4G, 5G, etc.

The wired communication module may be a module that performs communication with an external device. For example, the wired communication module may include at least one of a LAN module, an Ethernet module, an HDMI, a USB, a USB C-type, or a DP.

The memory 240 may store data required for the electronic apparatus 200 to operate according to various embodiments.

The memory 240 may be implemented as a memory embedded in the electronic apparatus 200 (e.g., volatile memory, non-volatile memory, hard drive or solid state drive, etc.), or may be implemented as a memory removably attached to the electronic apparatus 200 (e.g., memory card, external memory, etc.), depending on the purpose of storing data.

The memory 240 may store one or more instructions. The one or more processors 250 may perform the operation of the electronic apparatus 200 according to various embodiments by executing the one or more instructions stored in the memory 240. The memory 240 may store programs, applications, and data for driving the electronic apparatus 200.

The one or more processors 250 may include various processing circuitry and control the overall operations of the electronic apparatus 200. Specifically, the one or more processors 250 may be connected to the components of the electronic apparatus 200 to control of the overall operations of the electronic apparatus 200. For example, the one or more processors 250 may be connected to the infrared sensor 210, the camera module 210, the communication interface 230, and the memory 240 to control the electronic apparatus 200. The one or more processors 250 may include one or a plurality of processors.

The one or more processors 250 may perform the operations of the electronic apparatus 200 according to various embodiments by executing the one or more instructions stored in the memory 240.

The one or more processors 250 may include one or more of an ISP, a CPU, a GPU, an APU, an MIC, a DSP, an NPU, a hardware accelerator, or a machine learning accelerator. The one or more processors 250 may control one or any combination of the other components of the electronic apparatus 200, and may perform communication-related operations or data processing. The one or more processors 250 may execute one or more programs or instructions stored in the memory. For example, the one or more processors 250 may perform a method according to an embodiment by executing one or more instructions stored in the memory 240.

Hereinafter, for convenience of explanation, the one or more processors 250 will be referred to as the processor 250. For example, the processor 250 according to an embodiment of the disclosure may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The processor 250 may generate correction data. The correction data may be generated based on first correction data and second correction data.

The first correction data may include correction values for correcting a decrease in intensity of the infrared ray according to a distance from the infrared emitter 120. The correction values may be determined based on measured infrared intensity in a plurality of areas within the projection area.

The processor 250 may detect the intensity of infrared ray in each area using the infrared sensor 210. For example, the projection area may be divided into a plurality of areas. The processor 250 may detect the intensity of the infrared ray in each of the plurality of areas using the infrared sensors 210 disposed in each of the plurality of areas while the infrared ray is being output from the infrared emitter 120. Subsequently, the processor 250 may store information regarding the intensity of the infrared ray detected in each of the areas in the memory 240.

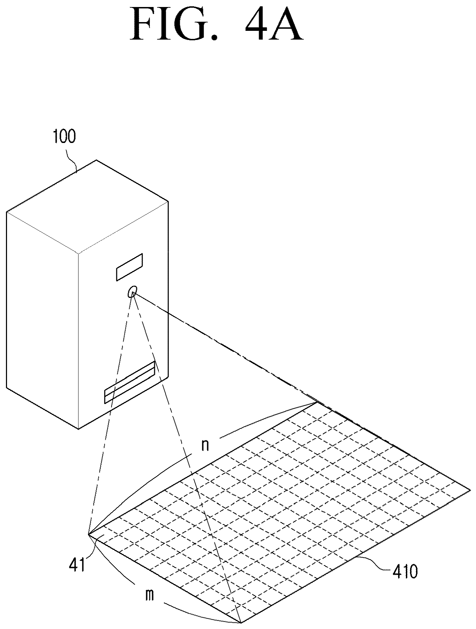

For example, as shown in FIG. 4A, a projection area 410 may be divided into n X m areas. Here, n and m are natural numbers equal to or greater than 2. The infrared sensor 210 may be disposed in area 41 from among the plurality of areas. The infrared sensor 210 may receive infrared ray output from the infrared emitter 120, and may detect the intensity of the received infrared ray. The infrared sensor 210 may transmit information regarding the detected intensity of the infrared ray to the processor 250.

If the above process is performed sequentially for the remaining areas, the infrared intensity can be measured in each of the plurality of areas.

The processor 250 may identify correction values for the plurality of areas. Subsequently, the processor 250 may store the identified correction values in the memory 240.

For example, the processor 250 may determine the correction values for the plurality of areas such that when the correction values for the plurality of area are applied to the intensities of the plurality of infrared ray measured in the plurality of areas, the intensities of the plurality of infrared ray to which the correction values are applied are equalized. For example, it is assumed that the intensities of infrared ray measured in the plurality of areas (e.g., a11, a12,..., anm) are r11, r12,..., rnm. The processor 250 may calculate correction values w11, w12,..., wnm for the plurality of areas to satisfy r11Xw11=r12Xw12=...=rnmXwnm.

The processor 250 may identify the pixels of the image sensor 133 corresponding to each area through area of interest (ROI) area matching.

For example, a marker may be placed on area 41 within the projection area 410. The marker may be an object to distinguish an area from other areas. The processor 250 may obtain an image of the projection area by photographing the projection area through the camera module 220. When the projector 100 is placed on a floor surface, the camera module 220 may be disposed at the same location where the infrared camera module 130 is disposed in the projector 100, and the shooting direction of the infrared camera module 130 and the shooting direction of the camera module 220 may be the same. The angle of view of the camera module 220, the number of pixels of the image sensor, and the like may be the same as the angle of view of the infrared camera module 130, the number of pixels of the image sensor 133, and the like.

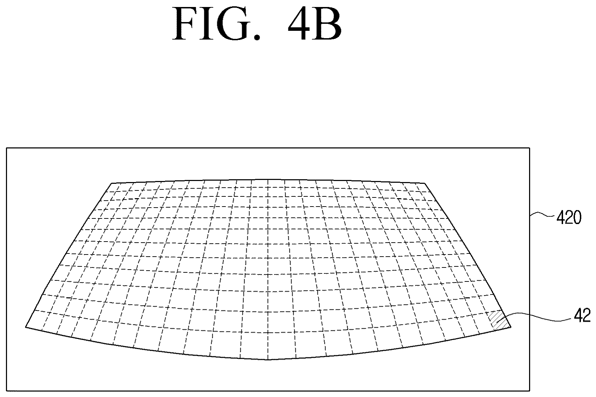

The processor 250 may identify which of the plurality of pixels of the image sensor of the camera module 220 captured the marker. For example, as shown in FIG. 4B, an image 420 obtained through the camera module 220 may include area 42 where a marker disposed in area 41 was photographed. In one example, the processor 250 may identify which of the plurality of pixels photographed area 42 using pixel values of the plurality of pixels of the image sensor of the camera module 220.

The processor 250 may identify pixels corresponding to the pixels that captured the marker, from among the plurality of pixels of the image sensor 133, based on locations of the pixels that captured the marker from among the plurality of pixels of the image sensor of the camera module 220. The pixels corresponding to the pixels that captured the marker may include pixels of the image sensor 133 that have the same location as the pixels that captured the marker. For example, the processor 250 may identify coordinate values of the pixels that captured the marker in the image sensor of the camera module 220, and identify pixels in the plurality of pixels of the image sensor 133 that have coordinate values equal to the identified coordinate values, thereby identifying pixels in the plurality of pixels of the image sensor 133 that correspond to the pixels that captured the marker. However, this is only an example, and the processor 250 may also identify pixels of the image sensor 133 that correspond to the pixels that captured the marker by considering the total number of pixels, the angle of view, the location of the pixels that captured the marker, and the like.

When the above process is performed sequentially for the remaining areas, the pixels of the image sensor 133 corresponding to each of the plurality of areas may be identified.

The processor 250 may store correction values for each area calculated based on the infrared intensity as correction values for the pixels of the image sensor 133 corresponding to each area in the memory 240 to generate first correction data. In the first correction data, correction values for the pixel values of the remaining pixels may be zero. For example, the processor 250 may store w11 as correction values for correcting the pixel values of the pixels of the image sensor 133 corresponding to the area 41. In addition, the processor 250 may store w12,..., wnm as correction values for correcting the pixel values of the pixels of the image sensor 133, which correspond to each of the remaining areas.

Accordingly, the first correction data may include correction values for the plurality of pixels of the image sensor 133. The correction values for the plurality of pixels may be values used to correct the pixel values of the plurality of pixels.

The correction values may include correction values for pixels corresponding to the plurality of areas from among the plurality of pixels and correction values (e.g., zero) for pixels corresponding to the remaining areas.

The correction values for the pixels corresponding to the plurality of areas may include correction values for the plurality of areas. The correction values for the plurality of areas may be determined such that, when the correction values for the plurality of areas are applied to the plurality of infrared intensities measured in the plurality of areas, the plurality of infrared intensities to which the correction values are applied are equal to each other.

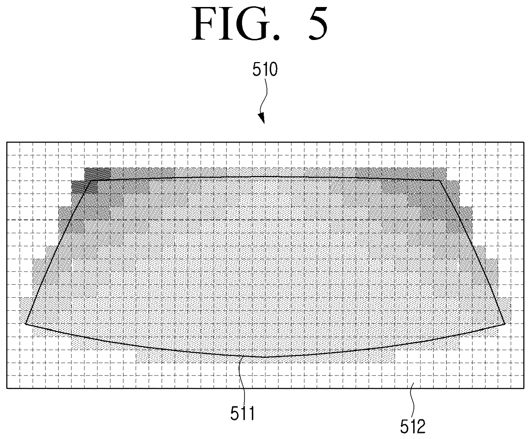

FIG. 5 is a diagram illustrating an example of first correction data according to various embodiments.

First correction data 510 may include correction values for correcting pixel values of the plurality of pixels of the image sensor 133. In the case of correction values 511 of the pixels corresponding to the projection area from among the plurality of pixels of the image sensor 133, the farther the locations of the areas from the infrared emitter 120, the larger the correction values for the pixels corresponding to the areas. Correction values 512 of the pixels corresponding to the remaining areas other than the projection area may be zero.

The second correction data may include correction values for a lens shading correction. The second correction data may include correction values for the plurality of pixels of the image sensor 133. As discussed above, a lens shading phenomenon may be caused by optical properties of the lens. The correction values of the second correction data may include correction values for removing such lens shading phenomenon, and may be determined in various ways which are known in the art. The second correction data may be stored in the memory 240.

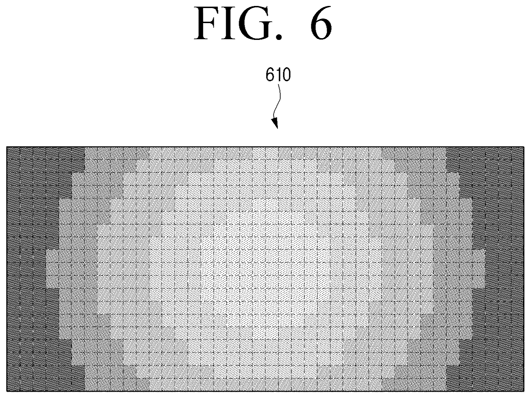

FIG. 6 is a diagram illustrating an example of second correction data according to various embodiments.

Second correction data 610 may include correction values for correcting pixel values of the plurality of pixels of the image sensor 133. As the locations of the pixels move from the center area to the edge area, the correction values of the pixels may have larger values.

The processor 250 may generate correction data based on the first correction data and the second correction data. The processor 250 may store the correction data in the memory 240.

The correction data may be data used by the projector 100 to correct the brightness of an image obtained through the infrared camera module 130.

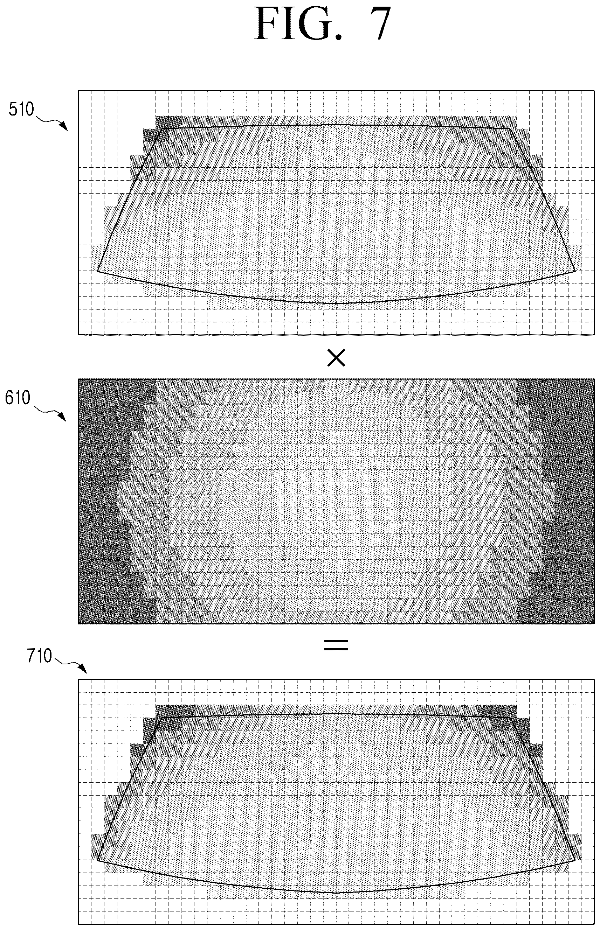

For example, as shown in FIG. 7, the processor 250 may obtain the correction values of correction data 710 by multiplying the correction values of the first correction data 510 and the correction values of the second correction data 520 on a pixel-by-pixel basis. The pixel-by-pixel multiplication may include multiplying the correction values between pixels at the same location. Accordingly, the correction data 710 may include correction values for correcting the plurality of pixels of the image sensor 133.

The processor 250 may transmit the correction data to the projector 100 through the communication interface 230. The processor 150 may receive correction data from the electronic apparatus 200 through the communication interface 170 and store the received correction data in the memory 140.

Referring back to FIG. 2A, the processor 150 may correct the brightness of the image obtained through the infrared camera module 130, and may identify whether a user's touch input for the projected image is received based on the corrected brightness.

For example, when infrared ray output from the infrared emitter 120 is reflected by an object present in the projection area and received through the infrared camera module 130, the processor 150 may obtain pixel values of the plurality of pixels of the image sensor 133.

The object may include any object that can reflect infrared ray. For example, the object may include a user's hand, fingers, pen, etc.

The processor 150 may obtain pixel values by performing signal processing on the image received from the image sensor 133. The format of the pixel values may be in a YUV data format, but is not limited thereto. The YUV data format may refer, for example, to a data format that separately expresses a luminance signal and a chroma signal. Y refers to a luminance signal, and U and V refer to a chroma signal. U may refer, for example, to the difference between the luminance signal and a blue signal component, and V may refer, for example, to the difference between the luminance signal and a red signal component. In YUV data, the Y component may represent information regarding brightness, and the UV component may represent information regarding color.

The processor 150 may correct the brightness of the image by applying correction values included in the correction data to the pixel values. The pixel values may include the Y component of the YUV data. For example, the processor 150 may correct the Y component by multiplying the correction values included in the correction data and the Y component on a pixel-by-pixel basis.

The processor 150 may identify whether there is an area in the image whose brightness is equal to or greater than a predetermined (e.g., specified) value based on the corrected brightness, and if it is identified that there is an area whose brightness is equal to or greater than the predetermined value, the processor 150 may identify that a touch input is entered at a location in the projected image corresponding to the identified area.

For example, the processor 150 may identify whether an area exists in the image where the magnitude of the corrected Y component is equal to or greater than a predetermined value. If the processor 150 identifies that an area exists in the image in which the magnitude of the Y component is equal to or greater than the predetermined value, the processor 150 may identify a location of the identified area in the image. The location may include a coordinate value. The processor 150 may identify an area corresponding to the identified location in the projected image. Information regarding coordinates of the image projected from the projection part 110 that match coordinates of the image obtained through the infrared camera module 130 may be stored in the memory 140. The processor 150 may identify an area of the image that matches the identified area in the image using the information stored in the memory 140, and may identify that a touch input is entered at a location of the identified area in the image.

When it is identified that a touch input is entered, the processor 150 may perform a function corresponding to the touch input.

For example, when it is identified that a touch input for an icon of the projected image is entered, the processor 150 may execute an application corresponding to the icon. In addition, when it is identified that a touch input for a menu of the projected image is entered, the processor 150 may perform a function corresponding to the menu (e.g., changing a setting of the projector 100, adjusting the volume, etc.). However, the present disclosure is not limited thereto, and the processor 150 may perform a variety of interaction functions that can be provided in response to a touch input.

In identifying the location of an object using the image obtained through the infrared camera module 130, the projector 100 according to an embodiment may perform not only a lens shading correction but also a correction for the difference in intensity of infrared ray reaching the object depending on the location of the object. Accordingly, the recognition rate for a touch input can be improved.

The processor 150 may identify the direction in which a touch input is entered.

For example, infrared ray output from the infrared emitter 120 is reflected by an object located in the projection area, and the area where the infrared ray is reflected by the object is determined depending on the direction in which a touch input is entered, and the shape of the area where the magnitude of the corrected Y component in the image is equal to or greater than a predetermined value may be determined according to the shape of the area where the infrared ray is reflected. Accordingly, the processor 150 may identify the direction of the touch input based on the shape of the area in the image where the magnitude of the corrected Y component is equal to or greater than the predetermined value.

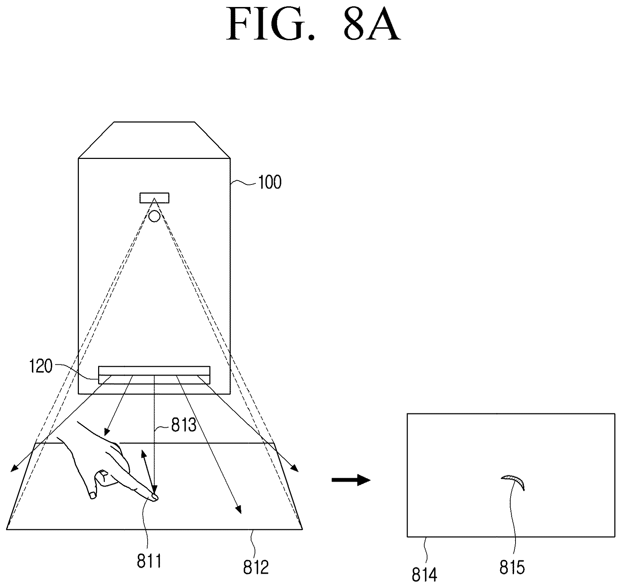

In an example, as shown in FIG. 8A, it is assumed that a user touches a point of projection area 812 in a left-to-right direction of the projection area 812 using finger 811. Since infrared ray 813 output from the infrared emitter 120 is reflected by the finger 811 facing to the right, area 815 where the magnitude of the corrected Y component is equal to or greater than a predetermined value in image 814 obtained through the infrared camera module 130 may have a convex shape to the right (or upper right). When it is identified that the area 815 has a convex shape to the right, the processor 150 may identify that a touch input in the right direction is entered.

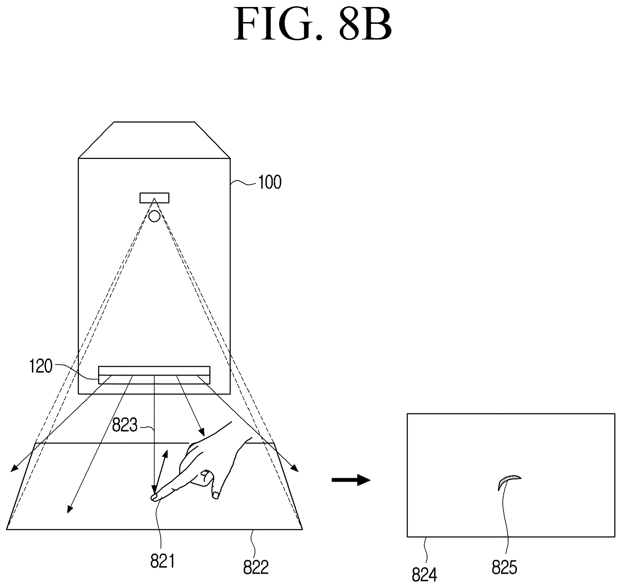

In an example, as shown in FIG. 8B, it is assumed that a user touches a point of projection area 822 in a right-to-left direction of the projection area 822 using finger 821. Since infrared ray 823 output from the infrared emitter 120 is reflected by the finger 821 facing to the left, area 825 where the magnitude of the corrected Y component is equal to or greater than a predetermined value in image 824 obtained through the infrared camera module 130 may have a convex shape to the left (or upper left). When it is identified that the area 825 has a convex shape to the left, the processor 150 may identify that a touch input in the left direction is entered.

In addition to the above-described examples, the processor 150 may detect various directions of a touch input. For example, when an area in the image has a shape that is convex upward, the processor 150 may identify that a touch input in the upward direction (e.g., a direction toward the projector 100) is entered. Alternatively, when an area in the image has a shape that is convex downward, the processor 150 may identify that a touch input in the downward direction (e.g., a direction opposite to the projector 100) is entered.

The processor 150 may perform a function corresponding to the direction of the touch input. In one example, the processor 150 may change the projected image based on the direction of the touch input. For example, the processor 150 may control the projection part 110 to project an earlier image when the processor 150 identifies that a touch input in the right direction is entered. The processor 150 may control the projection part 110 to project the next image when the processor 150 identifies that a touch input in the left direction is entered. However, these are only examples, and the processor 150 may perform various interaction functions based on the direction of the touch input.

According to an embodiment, the infrared emitter 120 may output infrared ray having a first height from the floor surface and infrared ray having a second height from the floor surface. The first height may be higher than the second height. For example, the infrared emitter 120 may include a first laser diode and a second laser diode disposed at a lower height than the first laser diode. As such, the projector 100 may output infrared ray having different heights using laser diodes installed in a multi-layer structure.

The processor 150 may identify whether a touch input is approaching the projection area or whether the touch input is moving away from the projection area using infrared ray output at different heights. For example, if the user's finger is close to the floor, both the first height of infrared ray and the second height of infrared ray may be reflected by the finger. As such, when the first height of infrared ray and the second height of infrared ray are reflected by an object, there can be two areas in the image where the magnitude of the corrected Y component is equal to or greater than a predetermined value. However, when the user's finger is positioned at a height higher than the second height but lower than the first height from the floor surface, only the infrared ray of the first height can be reflected by the finger. In this way, when only infrared ray of the first height is reflected by the object, the number of areas in the image where the magnitude of the corrected Y component is equal to or greater than the predetermined value can be one.

Accordingly, the processor 150 may identify the number of areas in the image, and identify whether the touch input is approaching the projection area or moving away from the projection area based on the number of areas.

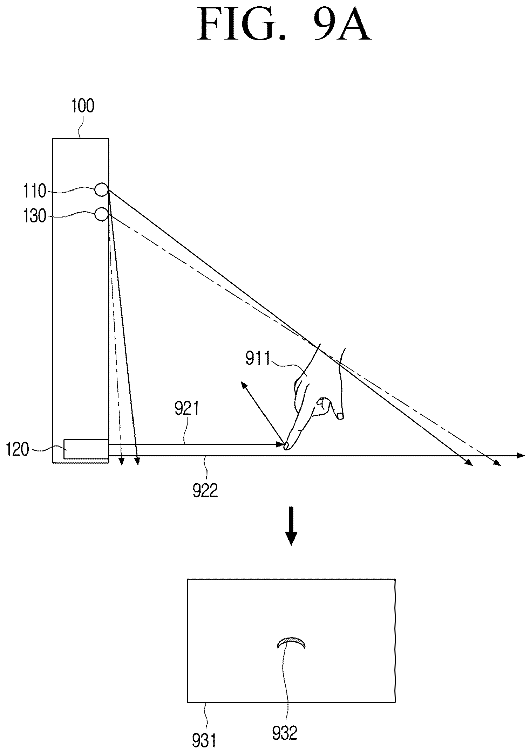

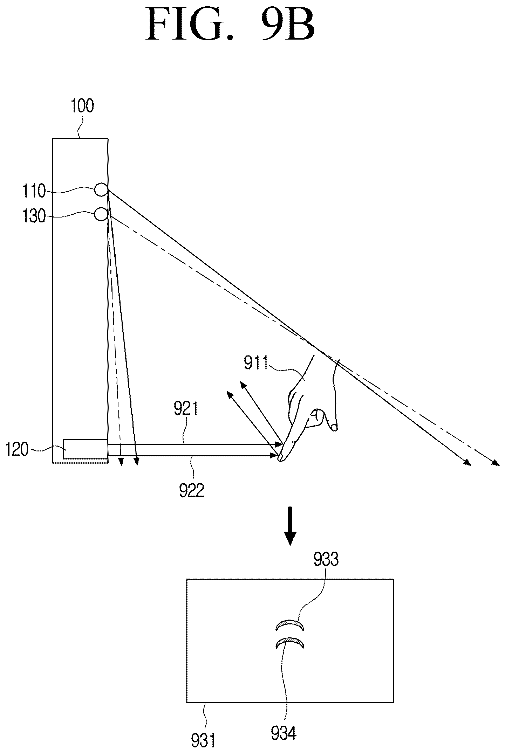

According to an embodiment, as shown in FIGS. 9A and 9B, the projector 100 may output infrared ray 921 having a first height from the floor surface and infrared ray 922 having a second height from the floor surface using the infrared ray emitter 120.

It is assumed that a user's finger 911 approaches the projection area. For example, as shown in FIG. 9A, when the finger 911 is positioned at a height higher than the second height but lower than the first height, the infrared ray 921 at the first height may be reflected by the finger 911. In this case, in image 931 obtained through the infrared camera module 130, there may be an area 932 in which the magnitude of the corrected Y component is equal to or greater than a predetermined value. For example, as shown in FIG. 9B, when the user's finger 911 is moved further toward the projection area and is positioned at a height lower than the second height, both the infrared ray 921 at the first height and the second infrared ray 922 at the second height may be reflected by the finger 911. In this case, there may be two areas 933, 934 in the image 931 obtained through the infrared camera module 130, in which the magnitude of the corrected Y component is equal to or greater than the predetermined value. When the processor 150 identifies that the number of areas in the image increases from one to two, the processor 150 may identify that the touch input is approaching the projection area.

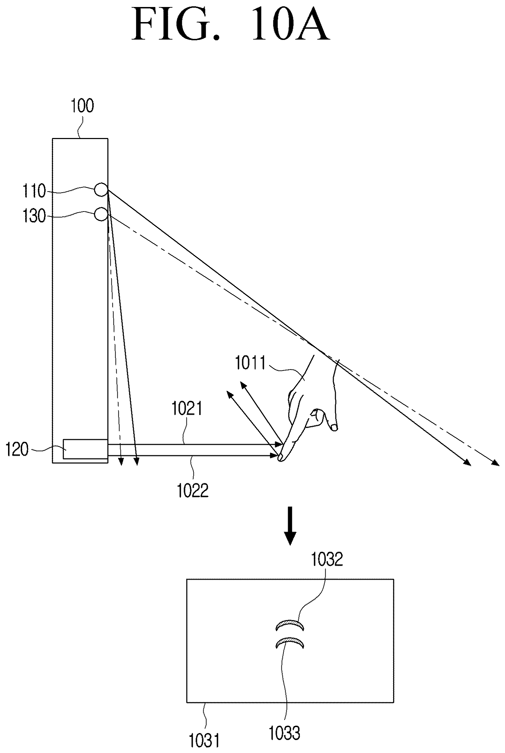

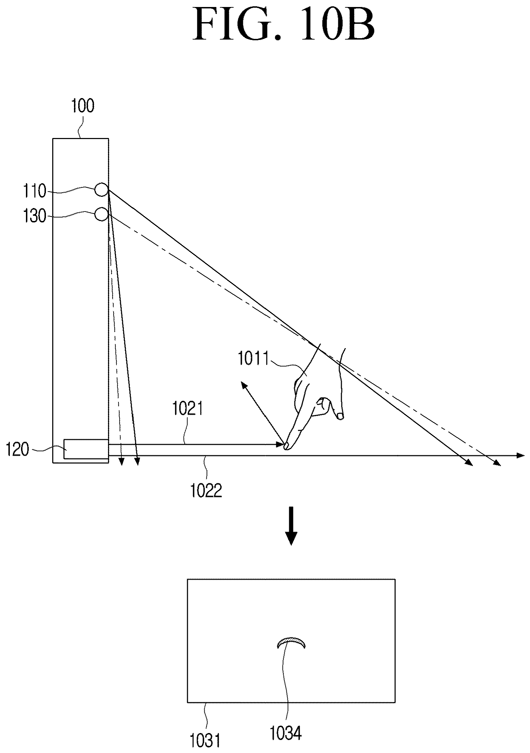

According to an example, as shown in FIGS. 10A and 10B, the projector 100 may output infrared ray 1021 having a first height from the floor surface and infrared ray 1022 having a second height from the floor surface using the infrared emitter 120.

It is assumed that a user's finger 1011 moves away from the projection area. For example, as shown in FIG. 10A, when the user's finger 1011 is positioned at a height lower than the second height, both the infrared ray 1021 at the first height and the infrared ray 1022 at the second height may be reflected by the finger 1011. In this case, there may be two areas 1032, 1033 in the image 1031 obtained through the infrared camera module 130, in which the magnitude of the corrected Y component is equal to or greater than a predetermined value. For example, as shown in FIG. 10B, when the user's finger 1011 is positioned away from the projection area and is positioned at a height higher than the second height but lower than the first height, the infrared ray 1021 at the first height may be reflected by the finger 1011. In this case, there may be one area 1034 in the image 1031 obtained through the infrared camera module 130, in which the magnitude of the corrected Y component is equal to or greater than the predetermined value. If the processor 150 identifies that the number of areas in the image is reduced from two to one, the processor 150 may identify that the touch input is moving away from the projection area.

In addition, the processor 150 may perform a corresponding function based on whether a touch input is approaching the projection area or moving away from the projection area. According to an embodiment, the processor 150 may control the projection part 110 to zoom in and project an image when the touch input is identified as approaching the projection area. Alternatively, the processor 150 may control the projection part 110 to zoom out and project the image when the touch input is identified as moving away from the projection area. However, the above embodiments are only examples, and the processor 150 may perform various interaction functions based on whether the touch input is approaching the projection area or moving away from the projection area.

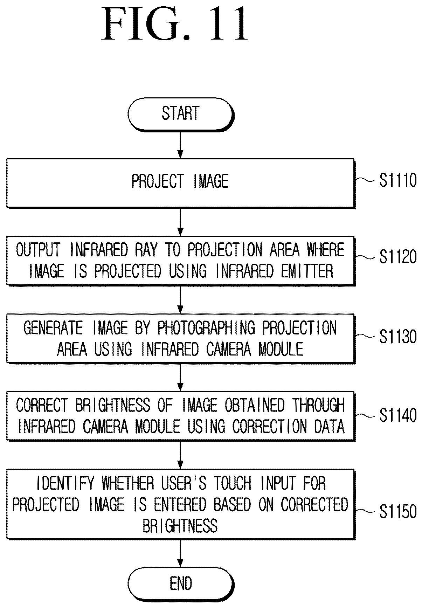

FIG. 11 is a flowchart illustrating an example method of identifying a touch input location of a projector according to various embodiments.

An image is projected (S1110).

Infrared ray is output to a projection area where the image is projected using an infrared emitter (S1120).

An image is generated by photographing the projection area using an infrared camera module (S1130).

The brightness of the obtained image is corrected through the infrared camera module using correction data (S1140).

Whether a user's touch input is entered for the projected image is identified based on the corrected brightness (S1150).

The correction data is generated based on first correction data and second correction data. The first correction data includes correction values to correct a decrease in intensity of the infrared ray according to a distance from the infrared emitter. The second correction data includes correction values for a lens shading correction.

The correction values included in the first correction data may be determined based on the intensity of infrared ray measured in a plurality of areas within the projection area.

For example, the correction values included in the first correction data may include correction values for a plurality of pixels of an image sensor of the infrared camera module. The correction values for the plurality of pixels of the image sensor may include correction values for pixels corresponding to a plurality of areas of the plurality of pixels and correction values for pixels corresponding to the remaining areas. The correction values for the pixels corresponding to the plurality of areas may include correction values for the plurality of areas. The correction values for the plurality of areas may be determined such that, when the correction values for the plurality of areas are applied to the plurality of infrared ray intensities measured in the plurality of areas, the plurality of infrared ray intensities to which the correction values are applied are equal to each other.

The second correction data may include correction values for a plurality of pixels of the image sensor of the infrared camera module. The correction values of the correction data may be obtained by multiplying the correction values of the first correction data and the correction values of the second correction data on a pixel-by-pixel basis.

In step S1140, when the infrared ray output from the infrared emitter is reflected and received by an object present in the projection area, pixel values of the plurality of pixels of the image sensor of the infrared camera module may be obtained, and the brightness of the image may be corrected by applying correction values included in the correction data to the pixel values. The pixel values may include a Y component of YUV data.

In step S1150, it may be identified whether an area in the image with a brightness equal to or greater than a predetermined value exists based on the corrected brightness, and when an area with a brightness equal to or greater than the predetermined value is identified as existing, it may be identified that a touch input is entered at a location in the projected image corresponding to the identified area.

According to an embodiment, the above-described various embodiments may be implemented in software including an instruction stored in a machine-readable storage medium that can be read by a machine (e.g., a computer). The machine may be a device that invokes the stored instruction from the storage medium and be operated based on the invoked instruction, and may include an electronic apparatus (e.g., projector 100, electronic apparatus 200) according to embodiments. In case that the instruction is executed by the processor, the processor may directly perform a function corresponding to the instruction using other components under the control of the processor. The instruction may include codes generated or executed by a compiler or an interpreter. The machine-readable storage medium may be provided in the form of a non-transitory storage medium. The "non-transitory" storage medium is tangible without including a signal, and does not distinguish whether data are semi-permanently or temporarily stored in the storage medium.

Further, according to an embodiment of the present disclosure, methods according to various embodiments described above may be provided in a computer program product. The computer program product is a commodity and may be traded between a seller and a buyer. The computer program product may be distributed in the form of a device-readable storage medium (e.g., compact disc read only memory (CD-ROM)) or online through an application store (e.g., PlayStore^{™}). In the case of online distribution, at least a portion of the computer program product may be stored, or at least temporarily generated, in a storage medium, such as a manufacturer's server, an application store's server, or the memory of a relay server.

In addition, according to an embodiment, the various embodiments described above may be implemented in a computer or a recording medium readable by a computer or a similar device using software, hardware, or a combination of software and hardware. In some cases, the various embodiments described in the disclosure may be implemented by a processor itself. According to software implementation, the various embodiments such as the procedures and functions described in the disclosure may be implemented by separate software. Each software may perform one or more functions and operations described in the disclosure.

Computer instructions for performing processing operations of a device according to the various embodiment of the disclosure described above may be stored in a non-transitory computer-readable medium. The computer instructions stored in the non-transitory computer-readable medium may allow a specific device to perform the processing operations of the device according to the various embodiments described above in case that the computer instructions are executed by a processor of the specific device. The non-transitory computer-readable medium is a medium that stores data and is readable by a device, as opposed to a medium that stores data for a short period of time, such as a register, a cache, a memory, etc. Various examples of the non-transitory computer-readable media include, but are not limited to, CDs, DVDs, hard disks, Blu-ray disks, USBs, memory cards, and ROMs.

In addition, each of the components (e.g., modules or programs) according to the various embodiments may include a single entity or a plurality of entities, and some of the corresponding sub-components described above may be omitted or other sub-components may be further included in the various embodiments. Alternatively or additionally, some of the components (e.g., the modules or the programs) may be integrated into one entity, and may perform functions performed by the respective corresponding components before being integrated in the same or similar manner. Operations performed by modules, programs or other components according to the various embodiments may be executed in a sequential manner, a parallel manner, an iterative manner or a heuristic manner, and at least some of the operations may be performed in a different order or be omitted, or other operations may be added.

While the disclosure has been illustrated and described with reference to various example embodiments, it will be understood that the various example embodiments are intended to be illustrative, not limiting and that the disclosure is not limited to the various example embodiments described above. It will be further understood by those skilled in the art that various modifications may be made without departing from the true spirit and full scope of the disclosure including the appended claims and their equivalents. It will also be understood that any of the embodiment(s) described herein may be used in conjunction with any other embodiment(s) described herein.

## Claims

1. A projector comprising:
a projection part comprising a light source configured to project an image;
an infrared emitter comprising circuitry configured to output an infrared ray to a projection area where the image is projected;
an infrared camera module comprising an infrared camera configured to generate an image by photographing the projection area using an image sensor;
a memory storing correction data including correction values for correcting brightness of the image; and
at least one processor configured to: correct brightness of an image obtained through the infrared camera module using the correction data, and identify whether a touch input for the projected image is entered based on the corrected brightness,
wherein the correction data is generated based on first correction data and second correction data;
wherein the first correction data includes correction values for correcting a decrease in intensity of the infrared ray according to a distance from the infrared emitter; and
wherein the second correction data includes correction values for correcting lens shading.

2. The projector as claimed in claim 1, wherein the correction values included in the first correction data are determined based on an intensity of the infrared measured in a plurality of areas in the projection area.

3. The projector as claimed in claim 2, wherein the correction values included in the first correction data include correction values for a plurality of pixels of the image sensor;
wherein the correction values for the plurality of pixels of the image sensor include correction values for pixels corresponding to the plurality of areas from among the plurality of pixels and correction values for pixels corresponding to remaining areas;
wherein the correction values for pixels corresponding to the plurality of areas include correction values for the plurality of areas; and
wherein the correction values for the plurality of areas are determined based on the correction values of the plurality of areas being applied to intensities of a plurality of infrared ray measured in the plurality of areas, and intensities of the plurality of infrared ray to which the correction values are applied become equal to each other.

4. The projector as claimed in claim 1, wherein the second correction data includes correction values for a plurality of pixels of the image sensor; and
wherein the correction values of the correction data are based on the correction values of the first correction data and the correction values of the second correction data being multiplied on a pixel-by-pixel basis.

5. The projector as claimed in claim 1, wherein at least one processor is configured to:
based on infrared ray output from the infrared emitter being reflected by an object present in the projection area and received by the infrared camera module, obtain pixel values of the plurality of pixels of the image sensor; and
correct brightness of the image by applying the correction values included in the correction data to the pixel values,
wherein the pixel values include Y component of YUV data.

6. The projector as claimed in claim 5, wherein at least one processor is configured to:
identify whether there is an area in the image in which brightness is equal to or greater than a specified value based on the corrected brightness; and
based on identifying that there is an area in which brightness is equal to or greater than the specified value, identify that the touch input is entered at a location of the projected image corresponding to the identified area.

7. A method of identifying a touch input of a projector, the method comprising:
projecting an image;
outputting infrared ray to a projection area where the image is projected using an infrared emitter;
generating an image by photographing the projection area using an infrared camera module including an infrared camera;
correcting brightness of the image obtained through the infrared camera module using the correction data; and
identifying whether a touch input for the projected image is entered based on the corrected brightness,
wherein the correction data is generated based on first correction data and second correction data;
wherein the first correction data includes correction values for correcting a decrease in intensity of the infrared ray according to a distance from the infrared emitter; and
wherein the second correction data includes correction values for correcting lens shading.

8. The method as claimed in claim 7, wherein the correction values included in the first correction data are determined based on an intensity of the infrared measured in a plurality of areas in the projection area.

9. The method as claimed in claim 8, wherein the correction values included in the first correction data include correction values for a plurality of pixels of the image sensor;
wherein the correction values for the plurality of pixels of the image sensor include correction values for pixels corresponding to the plurality of areas from among the plurality of pixels and correction values for pixels corresponding to remaining areas;
wherein the correction values for pixels corresponding to the plurality of areas include correction values for the plurality of areas; and
wherein the correction values for the plurality of areas are determined based on the correction values of the plurality of areas being applied to intensities of a plurality of infrared ray measured in the plurality of areas, and the intensities of the plurality of infrared ray to which the correction values are applied become equal to each other.

10. The method as claimed in claim 7, wherein the second correction data includes correction values for a plurality of pixels of the image sensor; and
wherein the correction values of the correction data are based on the correction values of the first correction data and the correction values of the second correction data being multiplied on a pixel-by-pixel basis.

11. The method as claimed in claim 7, wherein the correcting brightness of the image comprises:
based on infrared ray output from the infrared emitter being reflected by an object present in the projection area and received by the infrared camera module, obtain pixel values of the plurality of pixels of the image sensor; and
correct brightness of the image by applying the correction values included in the correction data to the pixel values,
wherein the pixel values include Y component of YUV data.

12. The method as claimed in claim 11, wherein the identifying whether a touch input for the projected image is entered comprises:
identifying whether there is an area in the image in which brightness is equal to or greater than a specified value based on the corrected brightness; and
based on identifying that there is an area in which brightness is equal to or greater than the specified value, identifying that the touch input is entered at a location of the projected image corresponding to the identified area.

13. A non-transitory computer-readable medium storing computer instructions that, when executed by at least one processor of a projector, cause the projector to perform operations comprising:
projecting an image;
outputting infrared ray to a projection area where the image is projected using an infrared emitter;
generating an image by photographing the projection area using an infrared camera module including an infrared camera;
correcting brightness of the image obtained through the infrared camera module using the correction data; and
identifying whether a touch input for the projected image is entered based on the corrected brightness,
wherein the correction data is generated based on first correction data and second correction data;
wherein the first correction data includes correction values for correcting a decrease in intensity of the infrared ray according to a distance from the infrared emitter; and
wherein the second correction data includes correction values for correcting lens shading.

14. The non-transitory computer-readable medium as claimed in claim 13, wherein the correction values included in the first correction data are determined based on an intensity of the infrared ray measured in a plurality of areas in the projection area.

15. The non-transitory computer-readable medium as claimed in claim 14, wherein the correction values included in the first correction data include correction values for a plurality of pixels of the image sensor of the infrared camera module;
wherein the correction values for the plurality of pixels of the image sensor include correction values for pixels corresponding to the plurality of areas from among the plurality of pixels and correction values for pixels corresponding to remaining areas;
wherein the correction values for pixels corresponding to the plurality of areas include correction values for the plurality of areas; and
wherein the correction values for the plurality of areas are determined based on the correction values of the plurality of areas being applied to intensities of a plurality of infrared ray measured in the plurality of areas, and intensities of the plurality of infrared ray to which the correction values are applied become equal to each other.
